# EUROPÄISCHE PATENTSCHRIFT

(11) **EP 2 072 826 B1**
(45) Veröffentlichungstag und Bekanntmachung des Hinweises auf die Patenterteilung: **14.10.2015**
(21) Anmeldenummer: 07024376.1
(22) Anmeldetag: 17.12.2007
(51) Int. Cl.: F04D 13/06, F04D 29/043, H02K 1/27

(54) **Rotor für einem Spaltrohrmotor**
Rotor for a canned motor
Rotor pour un moteur à gaine

(43) Veröffentlichungstag der Anmeldung: 24.06.2009
(73) Patentinhaber: Grundfos Management A/S, 8850 Bjerringbro (DK)
(72) Erfinder: Kjær, Oluf, 8850 Bjerringbro (DK); Høj, Finn Mathiesen, 8200 Århus N (DK); Grann, Helge, 8850 Bjerringbro (DK); Iversen, Kåre, 8870 Langå (DE)
(74) Vertreter: Vollmann, Heiko

(56) Entgegenhaltungen:
- EP-A- 0 899 049
- EP-A- 1 719 916
- JP-A- 58 072 692
- US-A- 4 942 322
- US-A1- 2002 125 779
- US-A1- 2004 051 416

## Beschreibung

Die Erfindung betrifft eine Nasslaufkreiselpumpe mit einen Rotor für einen Spaltrohrmotor gemäß den im Oberbegriff des Anspruchs 1 angegebenen Merkmalen.

Nasslaufkreiselpumpen werden als Umwälzpumpen millionenfach eingesetzt, beispielsweise in Heizungsanlagen zur Umwälzung des Heizwassers (Heizungsumwälzpumpen), zur Umwälzung des Brauchwassers (Zirkulationspumpen) oder in sonstiger Weise zur Förderung von Flüssigkeiten. Insbesondere für Pumpen kleiner und mittlerer Baugröße, welche früher typischerweise mit Asynchronmotoren angetrieben wurden, geht man heutzutage mehr und mehr dazu über, diese mit Permanentmagnetmotoren auszustatten. Aus dem EP 1 719 916 ist eine Nasslauferkreiselpumpe bekannt, wobei der Rotor ganz aus einem Permanentmagnet material gebildet ist. Dabei müssen der oder die im Rotor angeordneten Permanentmagneten zuverlässig flüssigkeitsdicht gekapselt sein, da der Rotor bei Nasslaufkreiselpumpen von einer Flüssigkeit, beispielsweise Wasser, umgeben ist. Bei bekannten Konstruktionen erfolgt dies typischerweise so, dass der Rotor eine zentrale Welle aufweist, die im Bereich des Stators von Permanentmagneten umgeben ist, welche mittels eines aus Edelstahl gebildeten Mantels flüssigkeitsdicht gekapselt sind. Der Mantel ist an seinen Nahtstellen und an der Anschlussstelle zur Welle zu verschweißen, was nicht nur fertigungstechnisch aufwändig ist, sondern auch zu Unwuchten führen kann, was insbesondere bei Rotoren, welche für höhere Drehzahlen bestimmt sind, wie dies bei modernen frequenzumrichtergesteuerten Pumpen häufig der Fall ist, von Nachteil ist.

Vor diesem Hintergrund liegt der Erfindung die Aufgabe zugrunde, einen gattungsgemäßen Rotor so auszubilden, dass die vorgenannten Nachteile vermieden werden, dass dieser insbesondere kostengünstig gefertigt werden kann.

Diese Aufgabe wird gemäß der Erfindung durch eine Pumpe mit einem Rotor mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben.

Der erfindungsgemäße Rotor für einen Spaltrohrmotor einer Nasslaufkreiselpumpe weist eine Welle zum Antrieb eines Pumpenlaufrads auf, ist mit mindestens einem Permanentmagneten versehen und weist eine den oder die Permanentmagneten fluiddicht einschließende Kapselung auf. Dabei ist gemäß der Erfindung der Rotor so ausgebildet, dass der umfängliche Teil der Kapselung im Bereich des oder der Magneten die Rotorwelle bildet.

Diese erfindungsgemäße Ausbildung hat den Vorteil, dass auf ein Durchführen der sonst üblichen separaten Rotorwelle im Bereich der Permanentmagneten verzichtet werden kann, so dass auch in diesem Bereich auf den sonst fertigungstechnisch aufwändigen Anschluss der Kapselung an die Welle verzichtet werden kann. Dadurch, dass die Kapselung selbst in diesem Bereich die Rotorwelle bildet, kann der verbleibende Innenraum vollständig zur Eingliederung der Permanentmagneten genutzt werden. Darüber hinaus wird das für die Kapselung der Magneten ohnehin erforderliche Material in vorteilhafter Weise auch zur Übertragung des Rotormomentes genutzt. Dabei wird typischerweise zur Rotorwellenbildung das den oder die Permanentmagneten umfängliche Kapselungsmaterial genutzt, was jedoch nicht ausschließt, dass auch zusätzlich, wenn der Rotor beispielsweise durch eine zentrale Ausnehmung durchsetzt ist, auch das Kapselungsmaterial am Innenumfang Wellenfunktion mit übernehmen kann.

Grundgedanke der vorliegenden Erfindung ist es also, im Bereich des oder der Magneten auf eine gesonderte Welle zu verzichten und in diesem Bereich die Kapselung zur Drehmomentübertragung des Rotors heranzuziehen. Dies kann insbesondere über den umfänglichen Teil der Kapselung auch bei geringer Materialstärke der Kapselung erfolgen.

Gemäß einer vorteilhaften Weiterbildung der Erfindung bestehen der oder die Magneten aus Neodynium, einem Werkstoff, welcher insbesondere deshalb in vorteilhafter Weise geeignet ist, da er einerseits magnetisch langzeitstabil ist und andererseits in den Rotor eingebracht und erst danach magnetisiert werden kann, was fertigungstechnisch besonders günstig ist.

In besonders einfacher Ausgestaltung kann gemäß einer Weiterbildung der Erfindung sich an die Verkapselung ein Wellenabschnitt anschließen, über den der Rotor gelagert ist und an dessen freien Ende das Laufrad angeordnet ist. Bei geeigneter Auslegung kann sich an den Rotor nur dieser Wellenabschnitt anschließen, was den großen Vorteil hat, dass eine Lagerung des Rotors an dem vom Pumpenlaufrad abgewandten Ende entfallen kann, so dass der Rotor einerseits in diesem Endbereich zylindrisch ausgebildet sein kann und andererseits mit engem Spalt im Spaltrohr laufen kann, was für den Wirkungsgrad vorteilhaft ist.

Es können jedoch auch gemäß einer Weiterbildung der Erfindung zu beiden Seiten der Verkapselung axial Wellenabschnitte angeschlossen sein, wobei der vom Pumpenlaufrad abgewandte Wellenabschnitt vorteilhaft zur Lagerung des Rotors in diesem Bereich dient.

Fertigungstechnisch besonders günstig ist es, wenn mindestens ein Wellenabschnitt einstückig mit dem umfänglichen Teil der Verkapselung ausgebildet ist. Bei einer solchen Ausbildung wird dieser einstückige Teil vorteilhaft aus Vollmaterial hergestellt und der umfängliche Teil der Verkapselung durch entsprechende spanabhebende oder erosive Bearbeitung des Vollmaterials in dem Bereich gebildet, in dem der oder die Magneten angeordnet sein sollen. Typischerweise wird das Vollmaterial durch Bohren eines Sacklochs in eine Stirnseite des Vollmaterials hergestellt.

Alternativ oder zusätzlich kann gemäß der Erfindung mindestens ein Wellenabschnitt durch die Verlängerung des umfänglichen Teils der Verkapselung gebildet sein, was den Vorteil hat, dass dieser ebenfalls einstückig mit dem umfänglichen Teil der Verkapselung sowie ggf. dem weiteren Wellenabschnitt ausgebildet sein kann. Dabei kann ein solcher Rotor aus Vollmaterial oder auch aus einem Rohrabschnitt hergestellt sein. Beides ist insbesondere für die Großserienfertigung besonders günstig.

Bei einer solchen Ausbildung, bei welcher ein Wellenabschnitt durch die Verlängerung des umfänglichen Teils der Verkapselung gebildet ist, wird vorteilhaft der stirnseitige Teil der Verkapselung am Magneten anliegend und stoffschlüssig mit dem umfangseitigen Teil der Verkapselung verbunden sein, beispielsweise durch Schweißen, insbesondere Strahlschweißen. Es kann also nach Einfügen des oder der Magneten an einer Stirnseite ein Einlegeteil eingefügt werden, das stoffschlüssig mit dem umfangseitigen Teil der Verkapselung verbunden wird. Dies kann vorteilhaft durch Strahlschweißen von außen durch die Verkapselung hindurch erfolgen. Wenn, was vorteilhaft ist, ein solches Einlegeteil zu beiden Seiten des oder der Magneten angeordnet ist, dann kann der Rotor aus einem Rohrabschnitt hergestellt werden, was insbesondere in der Großserienfertigung besonders günstig ist.

Alternativ kann gemäß einer Weiterbildung der Erfindung auch mindestens ein Wellenabschnitt stoffschlüssig mit dem umfänglichen Teil der Verkapselung verbunden sein, so dass die Verkapselung gesondert vom Wellenabschnitt gefertigt und anschließend vorzugsweise durch Schweißen, Löten oder dergleichen stoffschlüssig mit dem Wellenabschnitt verbunden wird.

In vorbeschriebener Weise kann an die typischerweise metallische Verkapselung vorteilhaft auch ein Wellenabschnitt aus keramischem Material anschließen, wobei dieser kraft- und/oder formschlüssig mit der Verkapselung verbunden sein kann, beispielsweise durch Einpressen eines Mehrkantprofils oder dergleichen.

Besonders vorteilhaft kann ein keramischer Wellenabschnitt zumindest abschnittsweise mit einer metallischen Schicht versehen sein, die stoffschlüssig, vorzugsweise durch Löten mit der Verkapselung verbunden ist. Bei einer solchen Anordnung muss die Verkapselung nicht notwendigerweise vollständig um die Magneten umlaufen, bei dieser Anordnung kann die Verkapselung stirnseitig durch den anschließenden Wellenabschnitt gebildet werden, der auf Grund der Verlötung vollständig dicht mit der Verkapselung verbunden ist. Der Wellenabschnitt bildet somit einen stirnseitigen Teil der Verkapselung, wobei dafür Sorge zu tragen ist, dass der Wellenabschnitt zumindest in dem Bereich, in dem er einen Teil der Verkapselung bildet, flüssigkeitsdicht ist. Dies kann beispielsweise durch Aufdampfen einer Metallschicht erzielt werden.

Besonders vorteilhaft ist der sich an die Verkapselung anschließende Wellenabschnitt aus keramischem Werkstoff gebildet, da die Welle dann gleichzeitig Teil eines keramischen Radiallagers bilden kann, mit der der Rotor im Spaltrohr bzw. in Verlängerung des Spaltrohrs gelagert ist. Das Lager kann auch aus anderem Material gebildet sein.

Bei einer erfindungsgemäßen Ausbildung, bei welcher ein erster, vom Pumpenlaufrad entfernter Lagersitz sowie ein zweiter, laufradnaher Lagersitz vorgesehen ist, die vorzugsweise beide zu einer Seite des Bereiches, über den sich der oder die Magneten erstrecken, angeordnet sind, ist der Bereich, über den sich der oder die Magneten erstrecken, vorteilhaft so ausgebildet, dass er einen kleineren oder gleichen Durchmesser als der Rotor im Bereich des zweiten Lagersitzes aufweist. Bei einer solchen Anordnung kann der Bereich, über den sich der oder die Magneten erstrecken, an einem Ende des Rotors und das Pumpenlaufrad am anderen Ende des Rotors angeordnet sein, wobei die Lagerung des Rotors in dem Bereich dazwischen erfolgt. Eine solche Anordnung ist nicht nur fertigungstechnisch hinsichtlich des Rotors günstig, sondern bedingt auch einen einfachen Spaltrohraufbau, wobei insbesondere der für den Wirkungsgrad des Motors wichtige Teil sowie der damit zusammenwirkende Teil des Rotors im Wesentlichen nach Wirkungsgradgesichtspunkten gefertigt werden kann, ohne dass in diesem Bereich beispielsweise eine erhöhte Wandstärke zur Anbringung eines Lagers oder dergleichen vorzusehen ist.

An dem laufradseitigen Ende des Rotors ist zur Befestigung des Pumpenlaufrads vorteilhaft eine Laufradaufnahme vorgesehen, wobei der Rotor mindestens in dem Bereich, über den sich der oder die Magneten erstrecken, einen kleineren oder gleichen Durchmesser als im Bereich der Laufradaufnahme aufweist.

Vorteilhaft weist der Rotor in dem Bereich, über den sich der oder die Magneten erstrecken, einen kleineren oder gleichen Durchmesser als im Bereich des ersten Lagersitzes auf. Bei einer solchen Ausbildung kann bei entsprechender Lagerauslegung und Ausbildung des Spaltrohres der Rotor mit im Wesentlichen über seine ganze Länge gleich bleibendem Durchmesser ausgebildet sein, was fertigungstechnisch besonders vorteilhaft ist, da er dann in der Großserienfertigung beispielsweise durch Centeriess-Schleifen in einfacher Weise mit hoher Maßhaltigkeit gefertigt werden kann. Darüber hinaus vermeidet dieses Verfahren Unrundheiten, was ebenfalls von Vorteil ist.

Zweckmäßigerweise ist der Rotor zumindest im Bereich der Lagersitze mit einer harten Schicht ausgestattet, insbesondere wenn der Rotor selbst Teil des Lagers bildet, was zweckmäßig ist. Der Rotor kann also in diesem Bereich oder über seine gesamte Länge festigkeitssteigernd ausgebildet sein, sei es durch Härten, Beschichten, Vergüten oder dergleichen. Besonders vorteilhaft erfolgt das Aufbringen einer abrasiven Schicht durch Flammbeschichten. Die Endbearbeitung kann dann durch Schleifen, vorzugsweise im Centerless-Verfahren erfolgen, das insbesondere in der Massenfertigung kostengünstig ist.

Insbesondere bei engen Spaltbreiten und Beaufschlagung des Spaltrohres mit Förderflüssigkeit kann eine zuverlässige Versorgung des am vom Laufrad abgewandten Ende des Rotors angeordneten Lagers mit Flüssigkeit nicht immer zuverlässig sichergestellt werden, weshalb es zweckmäßig sein kann, eine zusätzliche, sich im Wesentlichen längs durch den Rotor erstreckende Ausnehmung vorzusehen, über die auch ein Entlüften bzw. anfängliches Befüllen des Spaltrohrs erfolgen kann. Eine solche Ausnehmung kann durch ein Entlüftungsrohr vorgesehen sein, welches den Magneten und die axialen Teile der Verkapselung durchsetzt. Es versteht sich, dass das Entlüftungsrohr so innerhalb des Rotors angeordnet und ausgebildet ist, dass der Magnet oder die Magnete vollständig gekapselt ausgebildet sind, d. h. vor dem Zutritt von Flüssigkeit wirksam geschützt sind.

Vorteilhaft ist der erfindungsgemäße Rotor aus einem Rohrabschnitt gebildet, da ein solcher Rohrabschnitt kostengünstig in der Herstellung ist, Gewichtsersparnis mit sich bringt und hohe Maßhaltigkeit aufweisen kann. Um beispielsweise einen O-Ring auf dem Rotor festzulegen, wie dies beispielsweise im Bereich eines Lagers zweckmäßig sein kann, ist vorteilhaft mindestens eine Nut am Außenumfang des Rotors vorgesehen, in welcher in solche O-Ring liegt. Eine solche Nut kann bei Herstellung des Rotors aus einem Rohrabschnitt in einfacher Weise durch Umformen des Rohres gebildet werden, vorzugsweise durch Rollen. Es ist also keine spanabhebende Fertigung erforderlich. Das Rollen kann kostengünstig ohne gesondertes Aufspannen des Werkstücks erfolgen.

Der erfindungsgemäße Rotor bildet Teil einer Nasslaufkreiselpumpe, die von einem Spaltrohrmotor angetrieben ist. Dabei sind Rotor und Spaltrohr vorteilhaft so dimensioniert, dass der radiale Abstand zwischen Rotor und Spaltrohr der radialen Dicke der äußeren Lagerschale für den ersten Lagersitz entspricht. Bei dieser Anordnung ergibt sich somit in dem Bereich benachbart zum Lagersitz, also dort, wo typischerweise der oder die Magneten sitzen, ein entsprechender Abstand zwischen Rotor und Spaltrohr, der eine zuverlässige Entlüftung und Versorgung des von der Pumpe abgewandten Lagers mit Flüssigkeit gewährleistet. Bei einer solchen Anordnung kann in der Regel auf ein zentrales Entlüftungsrohr im Rotor verzichtet werden.

Die Erfindung ist nachfolgend anhand von in der Zeichnung dargestellten Ausführungsbeispielen näher erläutert. Es zeigen:
- Fig. 1: in perspektivischer teilgeschnittener Ansicht ein Kreiselpumpenaggregat mit einem Rotor nach der Erfindung,
- Fig. 2: das Kreiselpumpenaggregat gemäß Fig. 1 in Explosionsdarstellung,
- Fig. 3: eine Ansicht auf das Kreiselpumpenaggregat gemäß Fig. 1 von der Motorseite aus,
- Fig. 4: einen Schnitt längs der Schnittlinie A-A in Fig. 3,
- Fig. 5: die Einzelheit V in Fig. 4 in vergrößerter Darstellung,
- Fig. 6: in perspektivischer teilgeschnittener Darstellung die Pumpe mit Spaltrohr ohne Stator und Motorelektronik,
- Fig. 7: die Pumpe gemäß Fig. 6 im Längsschnitt,
- Fig. 8: eine alternative Ausführung von Spaltrohr und Rotor im Längsschnitt und
- Fig. 9 - 13: alternative Rotorausbildungen im Längsschnitt.

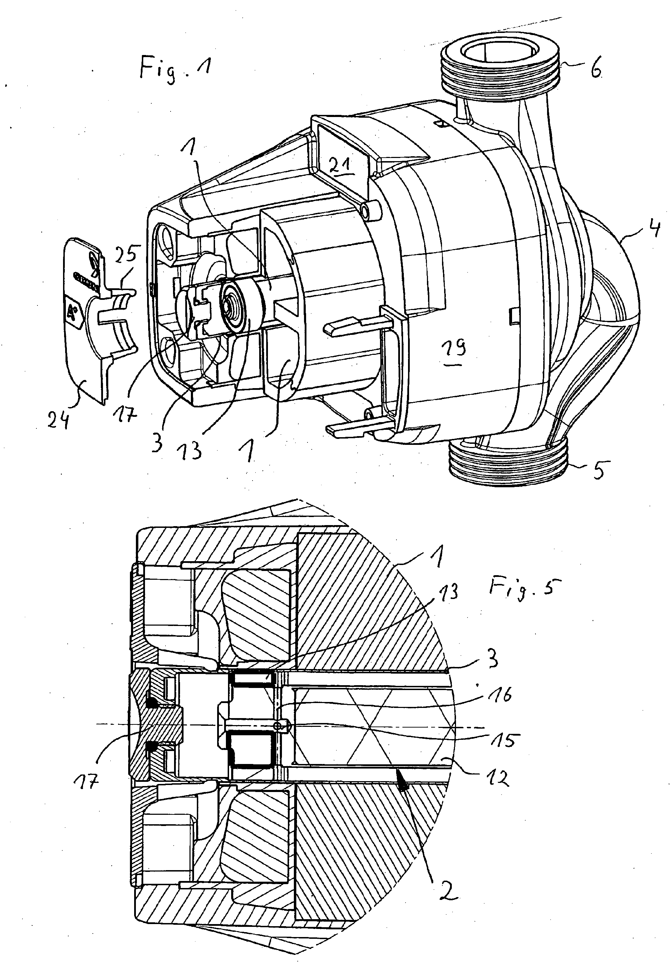

Bei dem anhand der Figuren 1 - 7 dargestellten Pumpenaggregat handelt es sich um eine Nasslaufkreiselpumpe der Inline-Bauart, die von einem Elektromotor angetrieben wird, dessen Stator 1 vom Rotor 2 durch ein Spaltrohr 3 getrennt ist.

Die Kreiselpumpe weist ein Pumpengehäuse 4 mit einem Einlassanschluss 5 und einem Auslassanschluss 6 auf. Vom Einlassanschluss 5 verläuft ein Kanal innerhalb des Pumpengehäuses 4 zu einem Saugmund eines Kreiselrades 7, das umfangseitig über eine im Pumpengehäuse eingegliederte Schnecke mit dem Auslassanschluss 6 in Verbindung steht. Das Kreiselrad 7 sitzt auf einer Laufradaufnahme 8, die fest mit dem Rotor 2 verbunden ist.

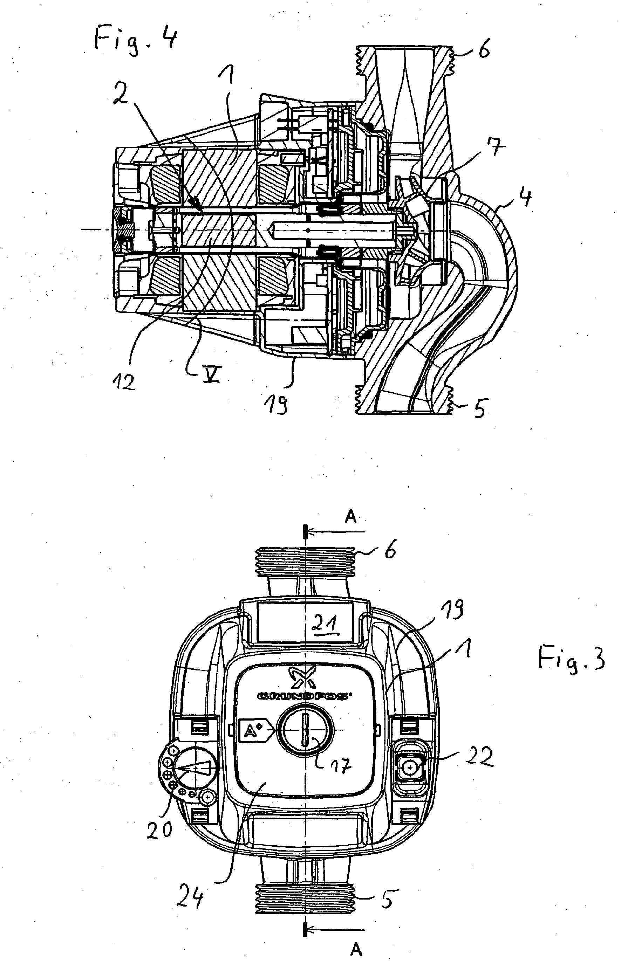

Der Rotor 2 hat, wie Fig. 4 zeigt, eine zylindrische, lang gestreckte Form und weist über seine gesamte Länge konstanten Durchmesser auf. An dem zum Kreiselrad 7 gerichteten Ende ist die Laufradaufnahme 8 auf dem zylindrischen Teil des Rotors 2 befestigt. Benachbart dazu in Richtung zum Motor schließt sich ein Radiallager sowie daran anschließend ein Axiallager an. Das Radiallager besteht aus der in Fig. 4 im Schnitt sichtbaren äußeren feststehenden Lagerschale 9, der innere Teil des Radiallagers wird durch den Rotor 1 in diesem Bereich gebildet. Die motorseitige Stirnseite der äußeren Lagerschale 9 des Radiallagers bildet zugleich die eine Lagerfläche des Axiallagers, dessen andere Lagerfläche durch die zur Pumpe weisende Stirnseite der Lagerschale 10 gebildet ist, die drehfest auf dem Rotor 2 angeordnet ist. Zwischen der Lagerschale 10 und dem Rotor 2 ist ein O-Ring 11 angeordnet, der in einer Nut am Rotor 2 liegt und gegen eine Abschrägung am motorseitigen Ende der Lagerschale 10 anliegt und diese damit auf dem Rotor 2 hält. Dieses Axiallager ist zur Aufnahme der im Betrieb der Pumpe über das Kreiselrad 7 in den Rotor 2 eingeleiteten Axialkräfte vorgesehen. Ein weiteres Axiallager ist zwischen der pumpenseitigen Stirnseite der äußeren Lagerschale 9 des Radiallagers und der gegenüberliegenden Stirnseite der Laufradaufnahme 8 gebildet, hierbei handelt es sich um ein Hilfslager, das im normalen Betrieb nicht belastet ist.

Der Rotor 2, der durch das Spaltrohr 3 vom übrigen Teil des Motors getrennt ist, weist im Bereich des Stators 1 in seinem Inneren Permanentmagneten 12 auf, die in an sich bekannter Weise mit den Statorwicklungen des Stators 1 magnetisch zusammenwirken und über die das den Rotor 2 antreibende Drehmoment erzeugt wird. Die Permanentmagneten 12, die aus Neodynium bestehen, aber auch aus anderem geeigneten Material hergestellt sein können, sind vollständig gekapselt, d. h. fluiddicht im Rotor 2 eingeschlossen. Am motorseitigen Ende des Rotors 2 ist ein weiteres Radiallager vorgesehen, dessen äußere Lagerschale 13 im Spaltrohr 3 eingegliedert ist und dessen innerer Lagerteil durch den Rotor 2 selbst gebildet wird.

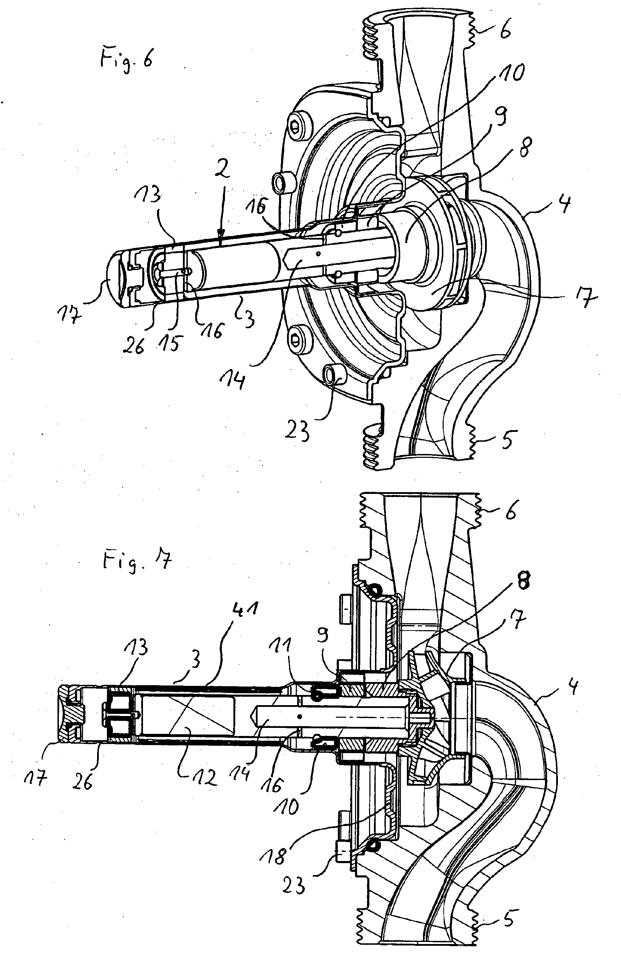

Der Rotor 2 weist sowohl pumpenseitig einen zentralen Kanal 14 als auch motorseitig einen zentralen Kanal 15 auf, die jeweils mit Abstand vor den Permanentmagneten 12 enden und jeweils nahe diesem Ende eine Querbohrung 16 aufweisen, die in dem zwischen Rotor 2 und Spaltrohr 3 gebildeten Spalt mündet. Diese Kanäle 14, 15, 16 dienen dazu, den den Rotor 2 umgebenden Raum mit Förderflüssigkeit zu füllen und eine gewisse Umwälzung der Förderflüssigkeit innerhalb des Spaltrohres 3 zu erzeugen. Da das Spaltrohr 3 im Bereich des Stators 1 zylindrisch ausgebildet ist und die äußere Lagerschale 13 zwischen dem ebenfalls zylindrisch ausgebildeten Rotor 2 und dem Spaltrohr 3 angeordnet ist, ergibt sich in dem Bereich, in dem die Permanentmagneten 12 angeordnet sind, sowie darüber hinaus in Richtung zur Pumpe ein Spalt zwischen Rotor 2 und der Innenseite des Spaltrohrs 3, der etwa der radialen Dicke der äußeren Lagerschale 13 entspricht und somit genügend Freiraum für eine Durchströmung des Spaltrohrs 3 bildet. Auf diese Weise ist eine Versorgung des motorseitigen Radiallagers mit Flüssigkeit sichergestellt. Je nach radialer Dicke der äußeren Lagerschale 13 kann dieser Freiraum unerwünscht groß werden, sodass sich beim Durchströmen Taylor-Wirbel bilden können, die unerwünscht sind. Dann kann es zweckmäßig sein, das Spaltrohr 3 im Bereich dieses Freiraums mit einer Hülse zu versehen, welche die verbleibende freie Spaltbreite verringert. Eine solche Hülse 41 ist in Fig. 7 beispielhaft dargestellt, sie ist im Bereich zwischen Lagerschale 13 und bis nahe zu dem sich zur Pumpe hin aufweitenden Bereich des Spaltrohrs 3 angeordnet. Die Hülse 41 besteht aus einem magnetisch nicht leitenden Werkstoff, z.B. Kunststoff oder Keramik. Diese Hülse 41 zur Verringerung der Spaltbreite verhindert nicht nur eine unerwünschte Wirbelbildung in diesem Bereich, sondern hält gleichzeitig grobe Schmutzpartikel vor dem Eindringen in diesen Bereich zurück. Es kann in der Innenwand dieser Hülse 41 ein durch eine Vertiefung ausgebildeter Kanal vorgesehen sein, beispielsweise durch eine schraubenlinienförmig über den Innenumfang angeordnete Nut, durch welche eine gezielte Führung der Strömung durch das Spaltrohr 3 um den Rotor 2 herum erfolgt, es können auch mehrere solcher Kanäle vorgesehen sein.

Angesaugt wird diese Flüssigkeit zentral im Pumpenlaufrad 7 durch die Laufradaufnahme 8 hindurch in den zentralen Kanal 14. Bei Rotation des Rotors 2 wird diese Flüssigkeit durch die Querbohrung 16 in den vorerwähnten Spalt getragen und erreicht somit das motorseitige Lager, wo eine entsprechende Umwälzung über den zentralen Kanal 15 und die Querbohrung 16 vorgesehen ist. Das Spaltrohr, das als Spaltrohrtopf ausgebildet ist, weist am Ende einen von außen zugänglichen Verschlussstopfen 17 auf, über den zum einen manuell eine Entlüftung des Spaltrohrs sowie zum anderen ein manueller Zugang zum Rotor 2 gegeben ist, um diesen beispielsweise manuell in Rotation zu versetzen, wenn dieser blockiert ist.

Der Rotor 2, dessen Aufbau sowie alternativer Aufbau weiter unten noch im Einzelnen erläutert ist, weist über seine gesamte Länge bis zur Laufradaufnahme 8 konstanten Durchmesser auf. Die Laufradaufnahme 8 ist aufgepresst und somit drehfest mit dem Rotor 2 und dem Kreiselrad 7 verbunden. Die im Inneren des Rotors im Bereich des Stators 1 angeordneten Permanentmagneten 12 sind aus Neodynium gebildet, in einer entsprechenden Ausnehmung des Rotors 2 eingebracht und flüssigkeitsdicht gekapselt sowie nach dem Einbringen magnetisiert.

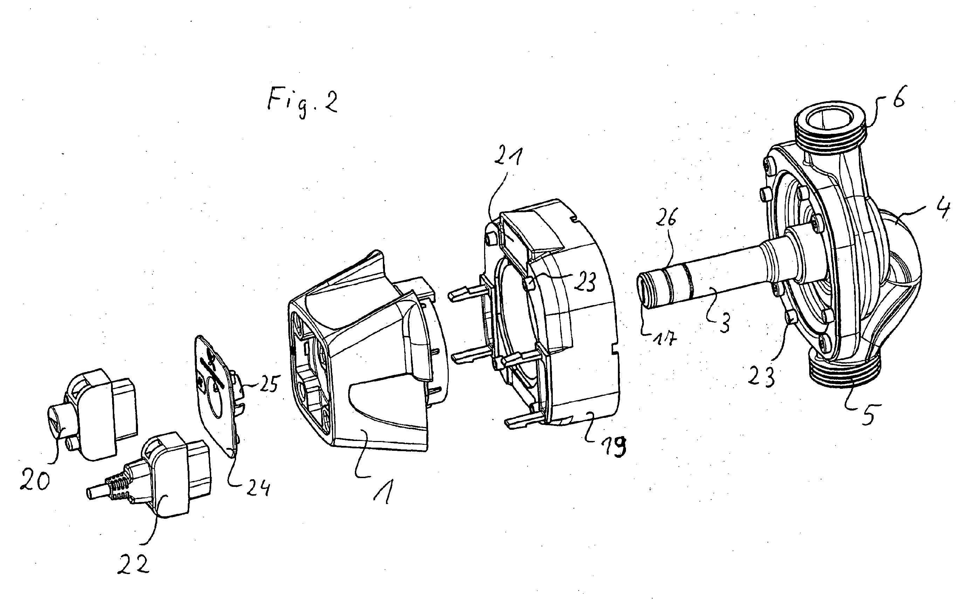

Der Rotor 2 ist mit seinen zu beiden Seiten der Permanentmagneten 12 angeordneten Radiallagern innerhalb des als Spaltrohrtopf ausgebildeten Spaltrohrs 3 drehbar gelagert. Das Spaltrohr 3 weist an seinem pumpenseitigen Ende eine flanschartige Ausbildung 18 auf, mit der es die zum Motor weisende Wandung des Pumpengehäuses bildet und mit der es einen äußeren Befestigungsflansch bildet, mit dem es am Pumpengehäuse schraubbefestigt ist. So bildet die anhand von Fig. 2 rechts dargestellte Einheit bestehend aus Spaltrohr 3 mit Pumpengehäuse 4 und dem darin eingegliederten Rotor 2 eine Montageeinheit, die sämtliche flüssigkeitsführenden Teile der Pumpe umfasst. Auf diese Montageeinheit wird in Achsrichtung des Rotors ein Elektronikgehäuse 19 sowie der Stator 1 aufgesetzt. Das Elektronikgehäuse 19 beinhaltet einen Frequenzumrichter sowie die zugehörige Steuer- und Regelelektronik, darüber hinaus Anschlüsse für einen Drehzahlwählschalter 20, eine Anzeige 21 sowie einen Netzanschluss 22, die parallel zum Stator geführt sind. Das Elektronikgehäuse 19 und der Stator 1 sind durch das Spaltrohr 3 innengeführt, außen sind sie darüber hinaus durch Passstifte 23 und entsprechend gegenüberliegend angeordnete Ausnehmungen geführt, welche beim Fügen der Bauteile einen formschlüssigen Verbund zwischen Pumpengehäuse 4, Elektronikgehäuse 19 und Stator 1 bzw. Statorgehäuse in alle Richtungen bis auf die entgegen der Aufsteckungsrichtung bilden. Zur Sicherung in dieser Richtung ist eine am Motor endseitig anliegende Platte 24 vorgesehen, welche das Typenschild des Motors trägt und die einen unterbrochenen, zur Pumpe hin vorspringenden Ring 25 aufweist, der einen umlaufenden Innenwulst aufweist, der mit einer Nut 26 nahe dem motorseitigen Ende des Spaltrohres 3 in Eingriff gebracht werden kann und damit diese Bauteile 1 und 19 an der aus Spaltrohr 3, Pumpengehäuse 4 und darin eingegliedertem Rotor 2 gebildeten Montageeinheit festlegt.

Bei der anhand der Figuren 1 - 7 dargestellten Ausführungsform sind Elektronikgehäuse 19 und Stator 1 bzw. Statorgehäuse mit darin befindlichem Stator zweiteilig ausgebildet, diese können auch in Form eines einteiligen Motorgehäuses ausgebildet sein. Das Spaltrohr 3 besteht aus Metall und ist ebenfalls einstückig bis zur flanschartigen Ausbildung 18 hin ausgebildet, weist jedoch an seinem Ende einen von außen zugänglichen Verschlussstopfen 17 auf. Die Lagerung des Rotors erfolgt über zwei Radiallager zu beiden Seiten der Permanentmagneten 12 im Rotor sowie nahe dem Pumpenlaufrad 7 über ein Axiallager sowie ein axiales Hilfslager.

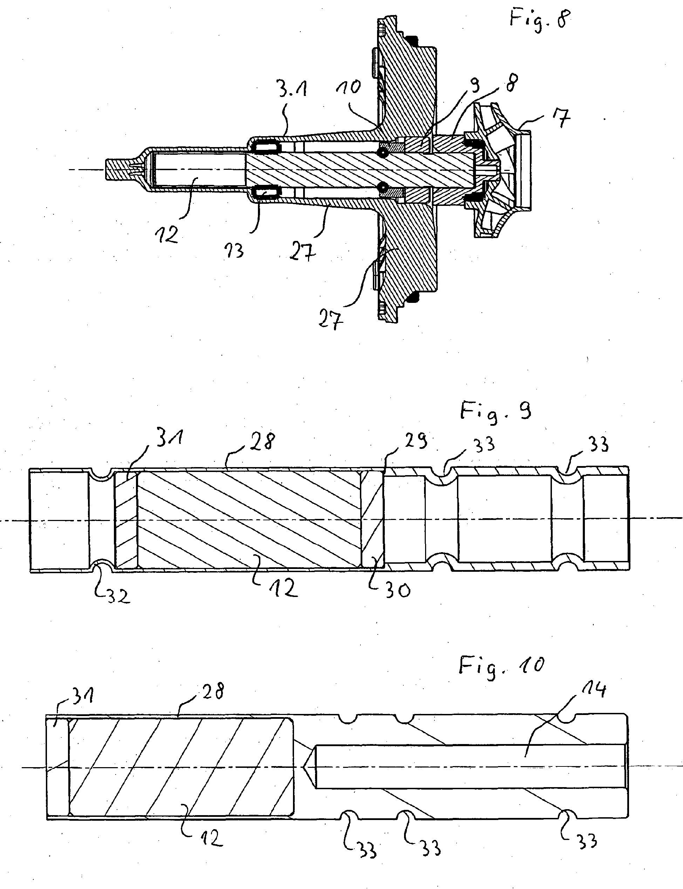

Bei der anhand von Fig. 8 dargestellten Ausführungsvariante ist das Spaltrohr 3.1 aus Kunststoff gebildet und weist in seinem an das Pumpengehäuse 4 anschließenden Bereich neben der Pumpenwandung noch Versteifungsrippen 27 auf, welche sternförmig um die Laufradachse angeordnet sind und in dem Lagerbereich auslaufen, der zwischen dem eigentlichen Spaltrohr und dem dazu benachbarten Radiallager gebildet ist. Wie die Schnittdarstellung nach Fig. 8 verdeutlicht, ist der Rotor 2.1 dort zwar ebenfalls von zylindrischer Form mit gleichem Außendurchmesser über die gesamte Länge, doch sind die Permanentmagneten 12 dort nicht zwischen den Radiallagern, sondern am motorseitigen Ende angeordnet. Die Lagerung des Rotors 2.1 erfolgt hingegen gegenüber dem mittleren Bereich. Die äußere Lagerschale 13 ist unmittelbar benachbart an den Bereich der Permanentmagneten 12 angeordnet, die äußere Lagerschale 9 und der Lagerring 10 sitzen an gleicher Stelle wie bei der vorbeschriebenen Ausführungsvariante. Die anhand von Fig. 8 dargestellte Ausführungsvariante zeigt ein aus Kunststoff im Spritzguss hergestelltes Spaltrohr. Es versteht sich, dass auch bei dieser Ausführungsvariante ein aus Edelstahlblech gebildetes Spaltrohr verwendet werden kann, wobei dann die Rippen 27 ggf. entbehrlich sind.

Anhand der Figuren 9 bis 13 sind unterschiedliche Rotoren und unterschiedliche Herstellungsmethoden für solche Rotoren beschrieben. Allen gemeinsam ist, dass der Rotor keine gesonderte Welle aufweist, sondern eine solche funktionell bildet. Bei allen Ausführungen sind die Magneten 12 vollständig fluiddicht gekapselt, dabei bildet mindestens der umfängliche Teil der Kapselung, also der Teil 28 der Kapselung einen Teil des Rotors, der das erzeugte Drehmoment überträgt.

Der anhand der Fig. 9 dargestellte Rotor besteht aus einem Zylinderrohr, das in seinem die Magneten 12 tragenden Bereich eine geringere Wandstärke als in dem sich dahinter in Richtung zur (nicht dargestellten) Laufradaufnahme 8 gerichteten Bereich aufweist, so dass sich zwar an der Außenseite ein mit Ausnahme der eingeprägten Nuten über die gesamte Länge gleicher Durchmesser ergibt, an der Innenseite jedoch eine Abstufung 29. Im Bereich dieser Abstufung 29 ist ein Einlegeteil 30 eingefügt, das zylindrische Form hat und mit seinem Außenumfang etwa dem Innenumfang des dünnwandigen Rohrbereiches entspricht, so dass es durch die Abstufung 29 formschlüssig in seiner Position gehalten ist. Daran anschließend ist das magnetische oder magnetisierbares Material in das Rohr eingefügt, wonach ein weiteres Einlegeteil 31 eingefügt ist, das in gleicher Weise wie das Einlegeteil 30 ausgebildet ist. Die Einlegeteile 30 und 31 sind von außen umlaufend durch Strahlschweißen mit dem Rohr verschweißt und bilden somit die stirnseitigen Teile der Verkapselung, dessen umfänglicher Teil mit 28 gekennzeichnet ist. Die daran anschließende Nut 32 ist durch Verformung des Rohres von außen eingeprägt, ebenso wie die beiden zur anderen Seite neben dem Einlegeteil 30 angeordneten Nuten 33, die beispielsweise zur Aufnahme des O-Rings 11 dienen können. Der so gebildete Rotor kann beispielsweise für die anhand der Figuren 1 - 7 beschriebenen Ausführungsvariante eingesetzt werden und ist in großen Stückzahlen kostengünstig zu fertigen.

Der anhand von Fig. 10 dargestellte Rotor ist aus Rundmaterial gefertigt. Dort ist zunächst von der in Fig. 10 linken Seite eine Sacklochbohrung eingebracht worden, in welche das magnetische bzw. magnetisierbare und später die Magneten 12 bildende Material sowie nachfolgend ein Einlegeteil 31 eingebracht worden. Das Einlegeteil 31 wird umlaufend verschweißt, so dass sich eine Verkapselung ergibt, die in dem die Magneten 12 umgebenden umfänglichen Bereich durch das verbleibende Wandungsmaterial 28, zur in Fig. 10 linken Seite durch das Einlegeteil 31 und zur anderen Seite durch das Grundmaterial gebildet ist. Von der anderen Seite ist in das Grundmaterial eine Sacklochbohrung als zentraler Kanal 14 eingebracht. Die Nuten 33 sind bei dieser Ausführung spanabhebend vom Außenumfang des Grundmaterials abgetragen. Der anhand von Fig. 10 beschriebene Rotor kann beispielsweise für die anhand von Fig. 8 beschriebene Ausführungsvariante eingesetzt werden.

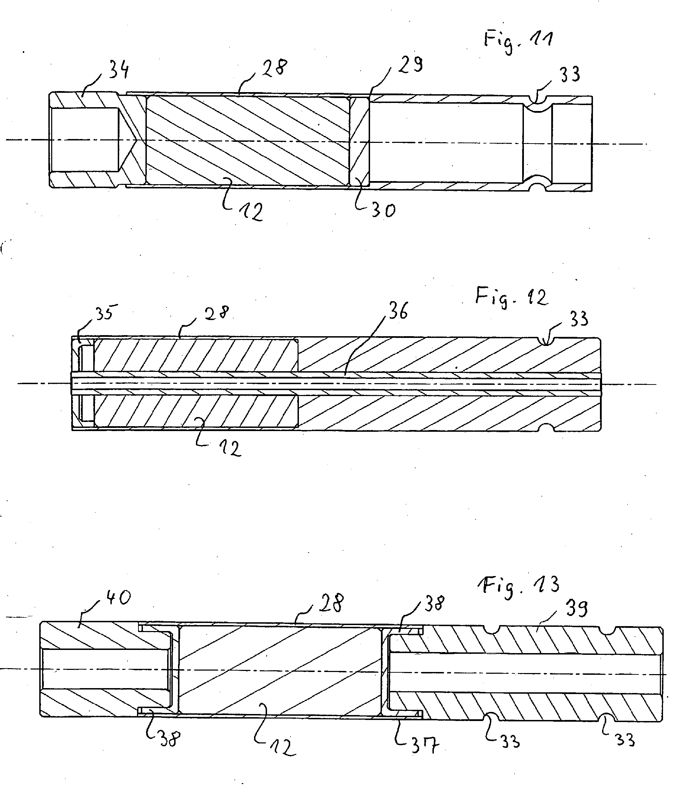

Bei dem anhand von Fig. 11 dargestellten Rotor dient ebenfalls ein rohrförmiger Körper ähnlich wie bei dem von Fig. 9 als Grundmaterial. Auch dort ist ein Einlegeteil 30 im Bereich der Abstufung 29 angeordnet, jedoch ist das motorseitige Ende des Rotors nicht durch ein Einlegeteil 31, sondern durch einen Wellenabschnitt 34 gebildet, dessen Außendurchmesser dem des übrigen Rotors entspricht. Der Wellenabschnitt 34 ist abgestuft und mit dem abgestuften Teil in den Grundkörper eingegliedert und umlaufend mit diesem verschweißt ist. Der Wellenabschnitt 34 kann alternativ auch aus einem keramischen Werkstoff bestehen. Dieser ist dann in dem abgestuften Bereich, in welchem er in den Grundkörper eingreift, sowie an seiner zu den Magneten 12 weisenden Stirnseite z.B. durch Aufdampfen mit einer Metallschicht versehen, welche randseitig mit dem Grundkörper verlötet ist. Wenn das Grundmaterial des Wellenabschnitts 34 selbst flüssigkeitsdicht ist, kann auf eine stirnseitige Metallisierung verzichtet werden.

Bei der anhand von Fig. 12 dargestellten Ausführung, welche einen Rotor ähnlich Fig. 10 darstellt für eine Lagerung, wie sie anhand von Fig. 8 beschrieben ist, ist der Rotor ebenfalls aus Vollmaterial gebildet, wobei von einer Stirnseite eine Ausnehmung für die Magneten 12 eingebracht worden ist, die von einem Einlegeteil 35 abgeschlossen ist, welches den Rotor stirnseitig bündig abschließt und durch Schweißen umlaufend mit dem umfänglichen Teil 28 verbunden ist. Zur Bildung eines zentralen Kanals, wie er anhand des Ausführungsbeispiels gemäß den Fig. 1 - 7 beispielhaft anhand der Kanäle 14 und 15 in Verbindung mit dem dazwischen gebildeten Spalt beschrieben ist, ist dort ein zentraler Kanal durch ein Rohr 36 vorgesehen, der den Rotor vollständig durchsetzt. Das Rohr 36 ist an seinen Stirnseiten mit dem Grundkörper umlaufend bzw. mit dem Einlegeteil 35 umlaufend verschweißt, so dass eine vollständige Kapselung der Magneten 12 gegeben ist. Dieser Rotor erlaubt somit eine Flüssigkeitsführung durch den Rotor hindurch, kann also auch dort eingesetzt werden, wo das Spaltmaß zwischen Rotor und Spaltrohr vergleichsweise klein ist oder Verunreinigungen in der Förderflüssigkeit nicht völlig ausgeschlossen werden können. Über das Rohr 36, das Teil der Kapselung bildet, kann ebenfalls ein Teil des Drehmoments übertragen werden, je nach Anordnung der Schweißstellen.

Der anhand von Fig. 13 dargestellte Rotor, der für die anhand der Fig. 1 - 7 dargestellte Ausführungsvariante einsetzbar ist, weist einen vergleichsweise dünnwandigen Rohrabschnitt 37 auf, der die umfängliche Ummantelung 28 der Permanentmagneten 12 bildet. In diesem Rohrabschnitt 37 sind stirnseitig zwei topfförmige Einlegeteile 38 eingegliedert, die umlaufend mit dem Rohrabschnitt 37 verschweißt sind. Diese Einlegeteile 38 bilden in Verbindung mit dem Rohrabschnitt 37 die Kapselung für die Permanentmagneten 12. Jeweils an die Einlegeteile 38 anschließend und in diese eingreifend ist ein Wellenabschnitt 39 bzw. ein Wellenabschnitt 40 angeordnet, der ebenfalls rohrförmig ausgebildet ist. Der in den Wellenabschnitten 39 und 40 gebildete zentrale Kanal ist durch die Kapselung der Permanentmagneten 12 unterbrochen. Hier sind also entsprechende Querbohrungen vorgesehen, wie dies anhand der Querbohrungen 16 in dem zuerst beschriebenen Ausführungsbeispiel beispielhaft dargestellt ist.

Die Variation der Ausführungsformen des Rotors, wie sie anhand der Fig. 9 - 13 beispielhaft beschrieben worden ist, stellt nur einen Teil der gemäß der Erfindung vorgesehen Ausführungen dar. Allen Ausführungen gemeinsam ist jedoch die vollständige metallische Kapselung der Permanentmagneten 12. Bei den dargestellten Ausführungen weist der Rotor darüber hinaus über seine gesamte Länge, abgesehen von den Nuten, den gleichen Durchmesser auf. Es kann jedoch insbesondere zur Anbringung der äußeren Lagerschale 13 der Rotor zum Ende hin auch abgestuft ausgebildet sein, so dass der zwischen Spaltrohr und Rotor im Bereich des Stators gebildete Spalt deutlich kleiner ausgebildet werden kann. Der abgestufte Teil ist dann entsprechend zu bearbeiten. Ungeachtet dessen kann die übrige Fläche des Rotors ggf. nach Flammbeschichten mit einem harten Werkstoff centerless geschliffen werden.

### Bezugszeichenliste

- 1 -: Stator
- 2 -: Rotor
- 2.1 -: Rotor in Fig. 8
- 3 -: Spaltrohr
- 3.1 -: Spaltrohr in Fig. 8
- 4 -: Pumpengehäuse
- 5 -: Einlassanschluss
- 6 -: Auslassanschluss
- 7 -: Kreiselrad
- 8 -: Laufradaufnahme
- 9 -: äußere Lagerschale des Radiallagers
- 10 -: Lagerring des Axiallagers
- 11 -: O-Ring
- 12 -: Permanentmagnete
- 13 -: äußere Lagerschale
- 14 -: zentraler Kanal
- 15 -: zentraler Kanal
- 16 -: Querausnehmung
- 17 -: Verschlussstopfen
- 18 -: flanschartige Ausbildung des Spaltrohrs
- 19 -: Elektronikgehäuse
- 20 -: Drehzahlwählschalter
- 21 -: Anzeige
- 22 -: Netzanschluss
- 23 -: Passstifte
- 24 -: Platte
- 25 -: Ring
- 26 -: Nut
- 27 -: Versteifungsrippen
- 28 -: umfänglicher Teil der Kapselung
- 29 -: Abstufung
- 30 -: Einlegeteil
- 31 -: Einlegeteil
- 32 -: Nut
- 33 -: Nuten
- 34 -: Wellenabschnitt
- 35 -: Einlegeteil
- 36 -: Rohr
- 37 -: Rohrabschnitt
- 38 -: Einlegeteil
- 39 -: Wellenabschnitt
- 40 -: Wellenabschnitt
- 41 -: Hülse

## Patentansprüche

1. Nasslaufkreiselpumpe mit einem Spaltrohrmotor mit einem Rotor und mit einer Welle zum Antrieb eines Pumpenlaufrads (7), mit mindestens einem Permanentmagneten (12) und mit einer den oder die Permanentmagneten (12) fluiddicht einschließenden Kapselung, **dadurch gekennzeichnet, dass** der umfängliche Teil (28) der Kapselung im Bereich des oder der Magneten (12) die Rotorwelle bildet.

2. Nasslaufkreiselpumpe nach Anspruch 1, **dadurch gekennzeichnet, dass** der oder die Magneten (12) aus Neodynium bestehen.

3. Nasslaufkreiselpumpe nach einem der vorhergehenden Ansprüche, **dadurch gekennzeichnet, dass** sich an die Verkapselung ein Wellenabschnitt (39, 40) anschließt, über dem der Rotor gelagert ist und an dessen freiem Ende das Laufrad (7) angeordnet ist.

4. Nasslaufkreiselpumpe nach einem der vorhergehenden Ansprüche, **dadurch gekennzeichnet, dass** sich an der Verkapselung axial beidseitig Wellenabschnitte (39, 40) anschließen.

5. Nasslaufkreiselpumpe nach einem der vorhergehenden Ansprüche, **dadurch gekennzeichnet, dass** mindestens ein Wellenabschnitt einstückig mit dem umfänglichen Teil (28) der Verkapselung ausgebildet ist.

6. Nasslaufkreiselpumpe nach einem der vorhergehenden Ansprüche, **dadurch gekennzeichnet, dass** mindestens ein Wellenabschnitt durch die Verlängerung des umfänglichen Teils (28) der Verkapselung gebildet ist.

7. Nasslaufkreiselpumpe nach einem der vorhergehenden Ansprüche, **dadurch gekennzeichnet, dass** die stirnseitigen Teile der Verkapselung an dem oder den Magneten (12) anliegend und stoffschlüssig mit dem umfangseitigen Teil (28) der Verkapselung verbunden ist.

8. Nasslaufkreiselpumpe nach einem der vorhergehenden Ansprüche, **dadurch gekennzeichnet, dass** die stirnseitigen Teile der Verkapselung durch Einlegeteile (30, 31) gebildet sind, die mit den umfangseitigen Teil (28) der Verkapselung durch Strahlschweißung von außen verbunden sind.

9. Nasslaufkreiselpumpe nach einem der vorhergehenden Ansprüche, **dadurch gekennzeichnet, dass** mindestens ein Wellenabschnitt (39, 40) stoffschlüssig mit dem umfänglichen Teil (28) der Verkapselung verbunden ist.

10. Nasslaufkreiselpumpe nach einem der vorhergehenden Ansprüche, **dadurch gekennzeichnet, dass** an der Verkapselung mindestens ein Wellenabschnitt aus keramischem Material anschließt, der vorzugsweise kraft- und/oder formschlüssig mit der Verkapselung verbunden ist.

11. Nasslaufkreiselpumpe nach einem der vorhergehenden Ansprüche, **dadurch gekennzeichnet, dass** der keramische Wellenabschnitt zumindest abschnittsweise mit einer metallischen Schicht versehen ist, die stoffschlüssig, vorzugsweise durch Löten mit der Verkapselung verbunden ist.

12. Nasslaufkreiselpumpe nach einem der vorhergehenden Ansprüche, **dadurch gekennzeichnet, dass** der Rotor (2) einen ersten, vom Pumpenlaufrad (7) entfernten Lagersitz sowie einen zweiten, laufradnahen Lagersitz aufweist, und mindestens im Bereich über den sich der oder die Magneten (12) erstrecken einen kleineren oder gleichen Durchmesser als im Bereich des zweiten Lagersitzes aufweist.

13. Nasslaufkreiselpumpe r nach einem der vorhergehenden Ansprüche, **dadurch gekennzeichnet, dass** der Rotor (2) mindestens im Bereich über den sich der oder die Magneten (12) erstrecken einen kleineren oder gleichen Durchmesser als im Bereich des ersten Lagersitzes aufweist.

14. Nasslaufkreiselpumpe nach einem der vorhergehenden Ansprüche, **dadurch gekennzeichnet, dass** eine Laufradaufnahme (8) zur Befestigung des Pumpenlaufrads (7) vorgesehen ist, wobei der Rotor (2) mindestens im Bereich über den sich der oder die Magneten (12) erstrecken einen kleineren oder gleichen Durchmesser als im Bereich der Laufradaufnahme (8) aufweist.

15. Nasslaufkreiselpumpe nach einem der vorhergehenden Ansprüche, **dadurch gekennzeichnet, dass** der Rotor (2) mindestens im Bereich der Lagersitze und der Laufradaufnahme (8) beschichtet und vorzugsweise centerless geschliffen ist.

16. Nasslaufkreiselpumpe nach einem der vorhergehenden Ansprüche, **dadurch gekennzeichnet, dass** ein Entlüftungsrohr (36) vorgesehen ist, welches den oder die Magneten (12) und die axialen Teile der Verkapselung durchsetzt.

17. Nasslaufkreiselpumpe nach einem der vorhergehenden Ansprüche, **dadurch gekennzeichnet, dass** der Rotor (2) aus einem Rohrabschnitt gebildet ist und mindestens eine umlaufende Nut (32) aufweist die durch Umformen, vorzugsweise Rollen gebildet ist.

18. Nasslaufkreiselpumpe nach einem der vorhergehenden Ansprüche, **dadurch gekennzeichnet, dass** der radiale Abstand zwischen Rotor (2) und Spaltrohr (3) der radialen Dicke der äußeren Lagerschale (13) für den ersten Lagersitz entspricht.

## Claims

1. A wet-running centrifugal pump with a can with a rotor and a shaft for the drive of a pump impeller (7), with at least one permanent magnet (12) and with an encapsulation enclosing the permanent magnet or magnets (12) in a fluid-tight manner, **characterised in that** the peripheral part (28) of the encapsulation, in the region of the magnet or magnets (12), forms the rotor shaft.

2. A wet-running centrifugal pump according to claim 1, **characterised in that** the magnet or magnets (12) consist of neodymium.

3. A wet-running centrifugal pump according to one of the preceding claims, **characterised in that** a shaft section (39, 40) connects to the encapsulation, via which section the rotor is mounted and at whose free end the impeller (7) is arranged.

4. A wet-running centrifugal pump according to one of the preceding claims, **characterised in that** shaft sections (39, 40) connect axially to the encapsulation on both sides.

5. A wet-running centrifugal pump according to one of the preceding claims, **characterised in that** at least one shaft section is designed as one piece with the peripheral part (28) of the encapsulation.

6. A wet-running centrifugal pump according to one of the preceding claims, **characterised in that** at least one shaft section is formed by the extension of the peripheral part (28) of the encapsulation.

7. A wet-running centrifugal pump according to one of the preceding claims, **characterised in that** the end-side parts of the encapsulation are connected to the peripheral part (28) of the encapsulation with a material fit and bearing on the magnet or magnets (12).

8. A wet-running centrifugal pump according to one of the preceding claims, **characterised in that** the end-side parts of the encapsulation are formed by inlay parts (30, 31), which are connected to the peripheral part (28) of the encapsulation by way of beam welding from the outside.

9. A wet-running centrifugal pump according to one of the preceding claims, **characterised in that** at least one shaft section (39, 40) is connected to the peripheral part (28) of the encapsulation with a material fit.

10. A wet-running centrifugal pump according to one of the preceding claims, **characterised in that** at least one shaft section of ceramic material connects to the encapsulation, and is connected to the encapsulation preferably with a non-positive and/or positive fit.

11. A wet-running centrifugal pump according to one of the preceding claims, **characterised in that** the ceramic shaft section at least in sections is provided with a metallic layer, which is connected to the encapsulation with a material fit, preferably by way of soldering.

12. A wet-running centrifugal pump according to one of the preceding claims, **characterised in that** the rotor (2) comprises a first bearing seat which is distanced to the pump impeller (7), as well as a second bearing seat which is close to the impeller, and at least in the region over which the magnet or magnets (12) extend, has a smaller or the equal diameter than in the region of the second bearing seat.

13. A wet-running centrifugal pump according to one of the preceding claims, **characterised in that** the rotor (2) at least in the region over which the magnet or magnets (12) extend, has a smaller or equal diameter than in the region of the first bearing seat.

14. A wet-running centrifugal pump according to one of the preceding claims, **characterised in that** an impeller receiver (8) for fastening the pump impeller (7) is provided, wherein the rotor (2) at least in the region over which the magnet or magnets (12) extends, has a smaller or equal diameter than in the region of the impeller receiver (8).

15. A wet-running centrifugal pump according to one of the preceding claims, **characterised in that** the rotor (2) at least in the region of the bearing seats and of the impeller receiver (8) is coated and is ground in a preferably centreless manner.

16. A wet-running centrifugal pump according to one of the preceding claims, **characterised in that** a bleed tube (36) is provided, which passes through the magnet or the magnets (12) and the axial part of the encapsulation.

17. A wet-running centrifugal pump according to one of the preceding claims, **characterised in that** the rotor (2) is formed from a tube section and comprises at least one peripheral groove (32) which is formed by forming, preferably rolling.

18. A wet-running centrifugal pump according to one of the preceding claims, **characterised in that** the radial distance between the rotor (2) and the can (3) corresponds to the radial thickness of the outer bearing shell (13) for the first bearing seat.

## Revendications

1. Pompe centrifuge humide équipée d'un moteur à gaine qui comporte un rotor et un arbre destiné à entraîner une roue mobile de pompe (7) et qui est muni d'au moins un aimant permanent (12) et d'un encapsulage qui renferme l'aimant permanent ou les aimant(s) permanent(s) (12) de façon étanche aux fluides, **caractérisée en ce que** la partie de grande longueur (28) de l'encapsulage forme l'arbre du rotor dans la région de l'aimant ou des aimants (12).

2. Pompe centrifuge humide selon la revendication 1, **caractérisée en ce que** l'aimant ou les aimants (12) est ou sont composé(s) de néodyme.

3. Pompe centrifuge humide selon l'une des revendications précédentes, **caractérisée en ce qu'**à l'encapsulage fait suite une partie d'arbre (39, 40) au moyen de laquelle le rotor est monté de façon rotative et à l'extrémité libre de laquelle est disposée la roue mobile (7).

4. Pompe centrifuge humide selon l'une des revendications précédentes, **caractérisée en ce que** des parties d'arbre (39, 40) font suite à l'encapsulage dans la direction axiale, des deux côtés.

5. Pompe centrifuge humide selon l'une des revendications précédentes, **caractérisée en ce qu'**au moins une partie d'arbre est réalisée en une seule pièce avec la partie de grande longueur (28) de l'encapsulage.

6. Pompe centrifuge humide selon l'une des revendications précédentes, **caractérisée en ce qu'**au moins une partie d'arbre est constituée par la prolongation de la partie de grande longueur (28) de l'encapsulage.

7. Pompe centrifuge humide selon l'une des revendications précédentes, **caractérisée en ce que** les parties frontales de l'encapsulage sont adjacentes à l'aimant ou aux aimants (12) et sont reliées à la partie de grande longueur (28) de l'encapsulage par une liaison opérant par continuité de matière.

8. Pompe centrifuge humide selon l'une des revendications précédentes, **caractérisée en ce que** les parties frontales de l'encapsulage sont constituées par des pièces emboîtées (30, 31) qui sont reliées extérieurement à la partie de grande longueur (28) de l'encapsulage par un soudage par rayonnement.

9. Pompe centrifuge humide selon l'une des revendications précédentes, **caractérisée en ce qu'**au moins une partie d'arbre (39, 40) est reliée à la partie de grande longueur (28) de l'encapsulage par une liaison par continuité de matière.

10. Pompe centrifuge humide selon l'une des revendications précédentes, **caractérisée en ce qu'**à l'encapsulage fait suite au moins une partie d'arbre en matière céramique, qui est reliée à l'encapsulage, de préférence par une liaison par action de force et/ou par sûreté de forme.

11. Pompe centrifuge humide selon l'une des revendications précédentes, **caractérisée en ce que** la partie d'arbre en céramique est munie, au moins en partie, d'une couche métallique qui est reliée à l'encapsulage par une liaison par continuité de matière, de préférence par brasage.

12. Pompe centrifuge humide selon l'une des revendications précédentes, **caractérisée en ce que** le rotor (2) présente un premier siège de palier éloigné de la roue mobile de pompe (7), ainsi qu'un second siège de palier proche de la roue mobile et qu'il présente, au moins dans la région sur laquelle s'étend ou s'étendent l'aimant ou les aimants (12), un plus petit diamètre ou le même diamètre que dans la région du second siège de palier.

13. Pompe centrifuge humide selon l'une des revendications précédentes, **caractérisée en ce que** le rotor (2) présente, au moins dans la région sur laquelle s'étend ou s'étendent l'aimant ou les aimants (12), un plus petit diamètre ou le même diamètre que dans la région du premier siège de palier.

14. Pompe centrifuge humide selon l'une des revendications précédentes, **caractérisée en ce qu'**il est prévu un support de roue mobile (8) destiné à la fixation de la roue mobile de pompe (7), le rotor (2) présentant, au moins dans la région sur laquelle s'étend ou s'étendent l'aimant ou les aimants (12), un plus petit diamètre ou le même diamètre que dans la région du support de roue mobile (8).

15. Pompe centrifuge humide selon l'une des revendications précédentes, **caractérisée en ce que** le rotor (2) est revêtu et de préférence rectifié sans centres au moins dans la région des sièges de paliers et du support de roue mobile (8).

16. Pompe centrifuge humide selon l'une des revendications précédentes, **caractérisée en ce qu'**il est prévu un tube de ventilation (36) qui traverse l'aimant ou les aimants (12) et les parties axiales de l'encapsulage.

17. Pompe centrifuge humide selon l'une des revendications précédentes, **caractérisée en ce que** le rotor (2) est formé à partir d'un tronçon de tube et présente au moins une gorge circulaire (32) qui est formée par déformation, de préférence par moletage.

18. Pompe centrifuge humide selon l'une des revendications précédentes, **caractérisée en ce que** la distance radiale entre le rotor (2) et la gaine (3) correspond à l'épaisseur radiale de la coquille extérieure de palier (13) du premier siège de palier.
